# EUROPEAN PATENT APPLICATION

(11) **EP 3 506 690 A1**
(43) Date of publication of application: **03.07.2019**
(21) Application number: 17211258.3
(22) Date of filing: 30.12.2017
(51) Int. Cl.: H04W 64/00, G01S 5/02, H04W 4/02

(54) **A METHOD AND SYSTEM OF DETERMINING THE LOCATION OF RADIO TERMINALS**

(71) Applicant: SIM Sp. z o.o., 20-151 Lublin (PL)
(72) Inventor: Michocki, Pawe, 20-834 Lublin (PL)
(74) Representative: Lampart, Jerzy

(57) **Abstract**

A method and system of locating mobile radio terminals using the RF Fingerprinting function. The data regarding the radio signal parameters, especially the level, transmitted by the terminal whose location is being estimated, is determined and sent to the location server by base stations receiving the signal (radiotelephones or radio repeaters). The location of the terminals is determined in such a way that the data received from the base station is compared with data from the RF Fingerprints database created for the known locations. The method being carried out in two stages, where the first stage of creating the RF Fingerprints database is used to determine the data about the parameters of the radio signal transmitted by the mobile terminal located in a specific known location, and is sent to the location server by the base stations receiving it (radiotelephones or radio repeaters) and the RF Fingerprints database is created, and the second is used to locate the terminals and compare their actual location with the RF Fingerprints database.

## Description

The subject of the invention is a method and system of determining the location of radio terminals without the use of external beacon-like devices, employing the analysis of radio signal levels.

A system for location estimation of wireless terminals inside structures using the radio signal propagation analysis is know from the U.S. Patent US20050124354 A1.

A system for location estimation of wireless terminals inside structures using the radio signal analysis and the "RF fingerprinting" function is know from the U.S. Patent US7725 111 B2. The goal of the invention is to develop such a system that will allow not to use hardware and software modifications in mobile radiotelephones whose located is estimated, as well as additional hardware components (beacons).

The essence of the invention is the method and system for determining the location of mobile radio terminals using the RF Fingerprinting function, where the parameters of radio signals transmitted by the terminal whose location is estimated are determined and sent to the location server by individual base stations.

The method of locating mobile radio terminals using the RF Fingerprinting function is characterized by the fact that data regarding the radio signal parameters, especially the level, transmitted by the terminal whose location is being estimated, is determined and sent to the location server by base stations receiving the signal (radiotelephones or radio repeaters), and then the location of the terminals is determined in such a way that the data received from the base stations is compared with data from the RF Fingerprints database previously created for the known locations, the method being carried out in two stages, where the first stage of creating the RF Fingerprints database is used to determine the data about the parameters of the radio signal transmitted by the mobile terminal located in a specific known location, and is sent to the location server by the base stations receiving it (radiotelephones or radio repeaters) and the RF Fingerprints database is created, and the second is used to locate the terminals and compare their actual location with the RF Fingerprints database.

The system of locating mobile radio terminals using RF Fingerprinting is characterised by the fact that it consists of at least two base stations (radiotelephone or radio repeater) and a location server linked together in such a way that the base stations communicate with the location server in real time via an IP link, sending to the location server the parameters of the radio signal they receive coming from the radio terminal whose location is being estimated, and receiving from the location server the return signal that contains commands which force the radio terminal to log in to a specific base station.

Based on a comparison of data received from the base stations with the RF Fingerprints database prepared for known locations, the probable location of the terminals is calculated. System elements
1. MU (Mobile Unit) - radio terminal (radiotelephone) whose location is being estimated
2. BS # - radio base station (radiotelephone or radio repeater)
3. LS - location server (Location Server)

The system includes from 1 to n (without the upper quantity limit) BS base stations (base radiotelephones or radio repeaters), LS location server and radio terminals/radiotelephones whose location is being determined (MU).

The BS base stations are connected to the LS location server via an IP link (IP-Link).

The method and system of determining the location is based on the use of the RF Fingerprinting function, which is a digital map (database) in which particular known locations have attributes assigned to them that describe the parameters of radio signals, in particular their level.

The method consists of two stages:
- the stage of creating a map - a RF Fingerprints database
- the stage of determining a location based on the RF Fingerprints database

The stage of creating the RF Fingerprints map (database) is based on the fact that for each known location of the radio terminal (MU), individual base stations (BS) send to the location server (LS) information on the parameters of the radio signal transmitted by the MU and received by the BS (RF DATA MU-BS#n). Based on information sent by the LS location server (via an IP link) the BS stations can force the MU to log into a specific BS in order to obtain measurement data. On this basis, the location server (LS) creates a database (RF Fingerprints) in which the parameters of radio signals received by individual stations (BS) can be found for known MU locations.

In the second stage, involving location estimation, during the communication between the MU and the BS stations information about the parameters of radio signals, in particular about the level of the signal from the MU received by the BS, is sent by individual BS to the LS location server. BS stations can force the MU to log into a specific BS in order to obtain measurement data.

LS - based on the comparison of the parameters received by BS to the RF fingerprints database - calculates the probable MU location.

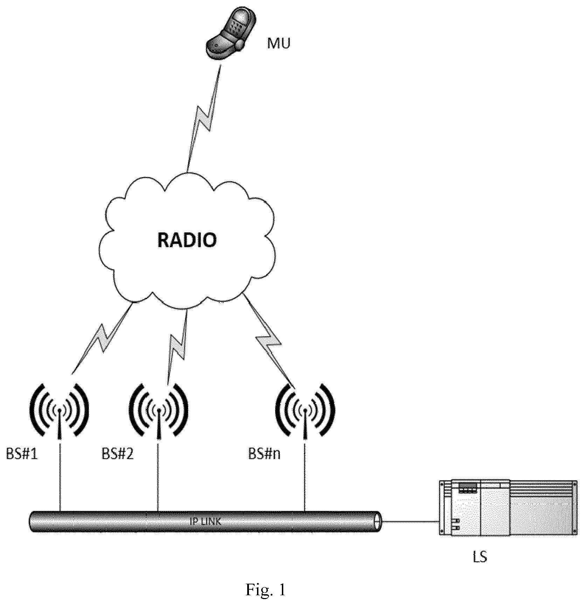

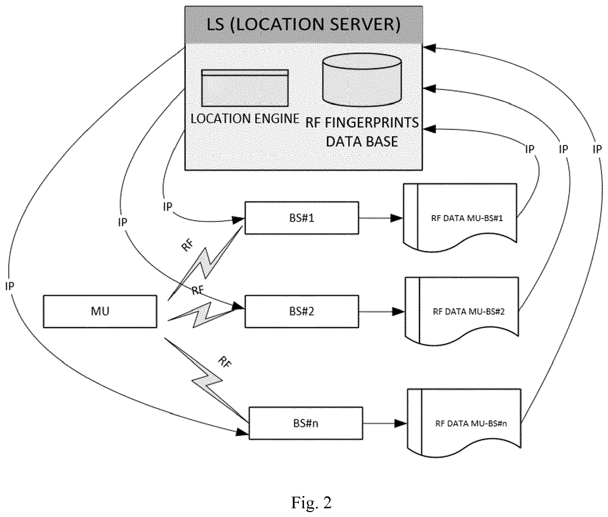

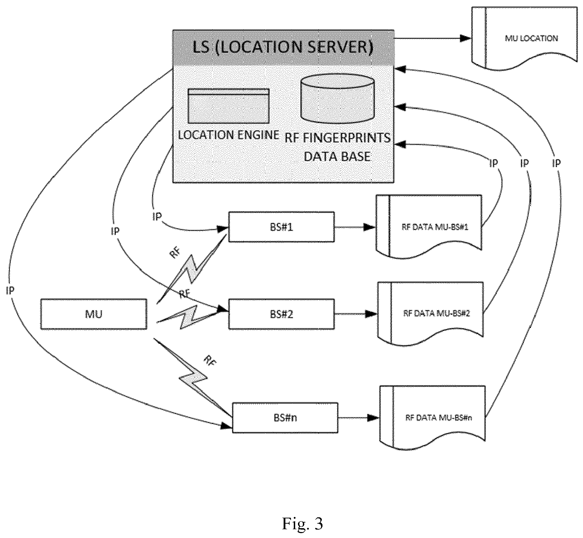

The invention is shown in the Figure, in which Fig. 1 shows the localization system, Fig. 2 - creation of the RF Fingerprints database for a given location, and Fig. 3 - determining the MU location.

### Example I

The system consists of 3 base stations in the form of radio repeaters, located in various places inside the building. In each place of the building, the radio terminals whose locations are being determined are within the range of all stations. The radio signal transmitted by the radio terminal during the communication is received by the receiving circuits of individual base stations. The base stations, based on data from the Location Server, force the terminal to log in and transmit, depending on the type of communication - in this case the voice call). Parameters of the signal received by the stations are then sent by an IP Link to the location server, which on the basis of their point comparison with information from the RF Fingerprints database determines the probable location of the terminal.

### Example II.

The system consists of 3 base stations in the form of radiotelephones, located in various places inside the building. In each place of the building, the radio terminals whose locations are being determined are within the range of 2 out of 3 stations. The radio signal transmitted by the radio terminal during the communication is received by the receiving circuits of up to 2 base stations. The base stations, based on data from the Location Server, force the terminal to log in and transmit, depending on the type of communication - in this case the text communication. Parameters of the signal received by the stations are then sent by an IP Link to the location server, which on the basis of their comparison with information from the RF Fingerprints database calculates and determines the probable location. Information about the lack of communication (range) with one of the base stations is also a parameter compared to in the process of calculating the probable location of the terminal.

### Example III

The system consists of 5 base stations in the form of radio repeaters, located in various places inside the building. In each place of the building, the radio terminals whose locations are being determined are within the range of all stations. The radio signal transmitted by the radio terminal during the communication is received by the receiving circuits of individual base stations. In the case of a "man down" event, e.g. a collapse or fall of a person with a radio terminal whose location is being determined, the radiotelephone automatically sends alarm messages to all base stations defined in its memory. Then, the individual base stations send, via the IP link to the location server, parameters of the radio signal received by them from the radio terminal, a radiotelephone, whose location is being determined. The location server, based on their point comparison with information from the RF Fingerprints database, calculates the probable location of the terminal.

## Claims

1. The method of locating mobile radio terminals using the RF Fingerprinting function is **characterized by** the fact that data regarding the radio signal parameters, especially the level, transmitted by the terminal whose location is being estimated, is determined and sent to the location server by base stations receiving the signal (radiotelephones or radio repeaters), and then the location of the terminals is determined in such a way that the data received from the base station is compared with data from the RF Fingerprints database created for the known locations, the method being carried out in two stages, where the first stage of creating the RF Fingerprints database is used to determine the data about the parameters of the radio signal transmitted by the mobile terminal located in a specific known location, and is sent to the location server by the base stations receiving it (radiotelephones or radio repeaters) and the RF Fingerprints database is created, and the second is used to locate the terminals and compare their actual location with the RF Fingerprints database.

2. The system of locating mobile radio terminals using RF Fingerprinting is **characterised by** the fact that it consists of at least two base stations (radiotelephone or radio repeater) and a location server linked together in such a way that the base stations communicate with the location server in real time via an IP link, sending to the location server the parameters of the radio signal they receive coming from the radio terminal whose location is being estimated, and receiving from the location server the return signal that contains commands which force the radio terminal to log in to a specific base station.
